# EUROPÄISCHE PATENTSCHRIFT

(11) **EP 4 617 031 B1**
(45) Veröffentlichungstag und Bekanntmachung des Hinweises auf die Patenterteilung: **23.09.2026**
(21) Anmeldenummer: 25163196.6
(22) Anmeldetag: 12.03.2025
(51) Int. Cl.: B29C 33/00, B29C 33/10, B29C 33/22, B29C 51/14, B27N 3/20, B27N 5/02

(54) **FORMWERKZEUG UND VERFAHREN ZUM LAMINIEREN VON DREIDIMENSIONALEN FORMTEILEN AUS EINEM FASERHALTIGEN MATERIAL**
MOULD AND METHOD FOR LAMINATING THREE-DIMENSIONAL MOULDED PARTS MADE OF A FIBRE-CONTAINING MATERIAL
MOULE ET PROCÉDÉ DE LAMINAGE DE PIÈCES MOULÉES TRIDIMENSIONNELLES À PARTIR D'UN MATÉRIAU FIBREUX

(30) Priorität: 15.03.2024 DE 102024107491
(43) Veröffentlichungstag der Anmeldung: 17.09.2025
(73) Patentinhaber: KIEFEL GmbH, 83395 Freilassing (DE)
(72) Erfinder: van der Schans, Johannes Marius, 5161 XG Sprang-Capelle (NL); Decoz, Cornelis Hendrikus Albertinus, 5161 ES Sprang-Capelle (NL)
(74) Vertreter: DTS Patent- und Rechtsanwälte PartmbB

(56) Entgegenhaltungen:
- WO-A1-2023/094272
- US-A- 5 262 181

## Beschreibung

### Technisches Gebiet

Es werden ein Formwerkzeug zum Laminieren von dreidimensionalen Formteilen aus einem faserhaltigen Material, wobei mindestens ein formbares Laminat auf eine Oberfläche eines Formteils aufgebracht wird, und ein Verfahren zum Laminieren von dreidimensionalen Formteilen aus einem faserhaltigen Material beschrieben.

Faserhaltige Materialien werden zunehmend eingesetzt, um bspw. Verpackungen für Lebensmittel (bspw. Schalen, Kapseln, insbesondere Kaffeekapseln, Boxen, Deckel, etc.) herzustellen. Dabei wird in letzter Zeit vermehrt faserhaltiges Material eingesetzt, welches Naturfasern aufweist oder aus solchen besteht, die bspw. aus nachwachsenden Rohstoffen oder Altpapier gewonnen werden können. Faserhaltige Materialien können in einem feuchten Zustand oder einem trockenen Zustand verarbeitet werden.

Bspw. kann faserhaltiges Material aus einer faserhaltigen Suspension (Pulpe) angesaugt und zu fertigen Formteilen verpresst werden. Formteile aus einem faserhaltigen Material können aber auch durch ein Umformen von Papier-, Karton-, Airlaid-, "compressed" (verdichtetes) Airlaid- und NonWoven-Materialien hergestellt werden, wobei die vorstehend genannten Materialien insbesondere auch in mehreren Schichten ("Multilayer") zu Formteilen verpresst werden können. Airlaid bezeichnet vereinzelte Fasern oder Faserbündel, die über ein Siebband angesaugt werden und sich an diesem zu einem relativ lockeren Faserverbund ablegen. Bei "compressed" Airlaid können diese Faserschicht anschließend verpresst sein. Weiterer relevanter Stand der Technik ist in folgenden Dokumenten offenbart: US 5 262 181

A, WO 2023/094272 A1. US 5 262 181 A offenbart ein Formwerkzeug wobei mindestens ein formbares Material auf eine Oberfläche eines Formteils aufgebracht wird, aufweisend einen Werkzeugkörper mit mindestens einem Formraum und eine Werkzeugkomponente mit mindestens einem relativ zum Formraum verlagerbaren Formstempel, der in mindestens einer Kammer der Werkzeugkomponente verlagerbar aufgenommen ist, wobei der Werkzeugkörper und die Werkzeugkomponente so zueinander in Anlage bringbar sind, dass ein unterer Rand der mindestens einen Kammer in einem Anlagebereich gegen einen Rand des mindestens einen Formraums drückt, und wobei der mindestens eine verlagerbare Formstempel in der mindestens einen Kammer mit mindestens einer ersten Dichtung in Verbindung steht, die gemeinsam mit dem mindestens einen Formstempel in der Kammer verlagerbar ist und einen Bereich der mindestens einen Kammer, in welchem der mindestens eine Formstempel verlagerbar ist, gegenüber einem restlichen Bereich der mindestens einen Kammer abdichtet.

### Hintergrund

Bei der Verwendung von Formteilen aus einem faserhaltigen Material liegt eine Herausforderung darin, eine Barriere gegen ein Eindringen von Stoffen von außen in den Innenraum und damit das im Formteil aufgenommene Produkt, sowie eine Barriere gegen ein Austreten von Stoffen bzw. des Produkts aus dem Formteil sicherzustellen. Hierzu ist es bspw. bekannt, Stoffe in das faserhaltige Material bei der Herstellung des Materials einzubringen. Ein Nachteil bei dieser Methode besteht darin, dass die Entsorgung solcher Formteile sehr aufwendig ist, weil die für die Barriereeigenschaften im Material enthaltenen Stoffe oftmals nicht recyclefähig und kompostierbar sind. Ein einfaches Herauslösen dieser Stoffe ist nur mit hohem Aufwand oder nicht möglich. Eine Alternative besteht darin, Formteile aus faserhaltigem Material mit einer dünnen Folie zu laminieren, wobei die Folie die Barriereeigenschaften bereitstellt. Nach der Verwendung kann die Folie einfach vom faserhaltigen Formteil getrennt werden, so dass der faserhaltige Teil bspw. kompostiert und die Folie einem weiteren Recyclingschritt unterzogen werden kann. Es sind zudem auch kompostierbare Folien bekannt, welche ein Trennen der Folie vom faserhaltigen Material überflüssig machen, weil beide Komponenten gemeinsam kompostiert werden können.

Das Laminieren von faserhaltigen Materialien erfolgt herkömmlich mit Hilfe von Unterdruck, der über eine Kavität und durch das faserhaltige Material hindurch bereitgestellt wird, wobei eine auf die Kavität aufgebrachte dünne Folie angesogen wird und sich dabei auf der inneren oder äußeren Oberfläche des Formteils ablegt und mit dem faserhaltigen Material verbindet. Hierzu wird die Folie erwärmt, damit diese leichter verformt bzw. angesaugt werden kann und sich mit dem faserhaltigen Material verbindet. Das Laminieren kann zusätzlich mit Hilfe von sogenannten Formstempeln erfolgen, wobei die Folie in einen Formraum der Kavität gedrückt und vorgeformt wird. Beim Laminieren wird zunächst der Randbereich der Folie gegen den Rand des Formteils gedrückt, so dass der Unterdruck zwischen der Folie und der Oberfläche des Formteils wirken kann. Der Luftdruck, der sich zwischen dem Formteil und der Folie aufbaut, führt dazu, dass sich die Folie nach oben wölbt, während sich der Formstempel nach unten bewegt, was zu Blasen, Falten, Löchern und einer schlechten Verbindung des Materials führt. Der sich aufbauende Luftdruck führt ferner dazu, dass die Folie auf den Formstempel gedrückt wird, wodurch sie abkühlt und eine ordnungsgemäße Verbindung mit dem faserhaltigen Material verhindert wird. Somit ist es mit dem bekannten Verfahren und Aufbau nicht möglich, eine gleichmäßige Verteilung eines Laminiermaterials bzw. einer Folie zu erreichen.

### Aufgabe

Es besteht daher die Aufgabe darin eine Lösung anzugeben, welche die Probleme des Stands der Technik behebt und ein Laminieren von dreidimensionalen Formteilen aus einem faserhaltigen Material ohne Blasen, Falten, Löchern etc. ermöglicht, wobei die Folie über die zu laminierende Fläche gleichmäßig verteilt wird.

### Lösung

Die vorstehend genannte Aufgabe wird durch eine Anordnung nach Anspruch 1 gelöst. Das Formwerkzeug ist ein Formwerkzeug zum Laminieren von dreidimensionalen Formteilen aus einem faserhaltigen Material, wobei mindestens ein formbares Laminat (Laminiermaterial, bspw. Folie) auf eine Oberfläche eines Formteils aufgebracht wird, aufweisend einen Werkzeugkörper mit mindestens einem Formraum, in welchen ein Formteil aus faserhaltigem Material einsetzbar ist, und eine Werkzeugkomponente mit mindestens einem relativ zum Formraum verlagerbaren Formstempel, der in mindestens einer Kammer der Werkzeugkomponente verlagerbar aufgenommen ist, wobei der Werkzeugkörper und die Werkzeugkomponente so zueinander in Anlage bringbar sind, dass ein unterer Rand der mindestens einen Kammer in einem Anlagebereich gegen einen Rand des mindestens einen Formraums drückt, und wobei der mindestens eine verlagerbare Formstempel in der mindestens einen Kammer mit mindestens einer ersten Dichtung in Verbindung steht, die gemeinsam mit dem mindestens einen Formstempel in der Kammer verlagerbar ist und einen Bereich der mindestens einen Kammer, in welchem der mindestens eine Formstempel verlagerbar ist, gegenüber einem restlichen Bereich der mindestens einen Kammer abdichtet.

Die Ausbildung des Formwerkzeugs ermöglicht ein Laminieren ohne die Bereitstellung von Unterdruck über den Formraum einer Kavität. Gegenüber bekannten Ausführungen aus dem Stand der Technik wird der Bereich zwischen dem Formstempel und einem Laminat über die mindestens eine Dichtung abgedichtet, so dass das darin enthaltene Gas oder Gasgemisch, nachfolgend als "Luft" bezeichnet, ein "Luftpolster" ausbildet, welches beim Bewegen des Formstempels im geschlossenen Zustand des Formwerkzeugs eine Verformung des Laminats bewirkt oder zumindest unterstützt. Durch die mindestens eine erste Dichtung wird ein Druckunterschied über und unter dem Laminiermaterial verhindert. Dadurch wird verhindert, dass sich das Laminiermaterial, bspw. eine Folie, nach oben wölbt. Zudem wird damit der Kontakt des Laminats bzw. der Folie mit dem Formstempel minimiert, wodurch ein Abkühlen des Laminiermaterials verhindert und die Bindungseigenschaften zum faserhaltigen Material verbessert werden. Darüber hinaus kann die Materialverteilung des Laminiermaterials durch die Form des Formstempels gesteuert werden.

Vorteilhaft kann sich damit an der der Folie zugewandten Oberfläche des Formstempels ein Luftpolster ausbilden, welches die Folie nach unten drückt, so dass es im Wesentlichen zu keinem direkten Kontakt zwischen der Oberfläche des Formstempels und der Folie kommt.

In weiteren Ausführungen kann im Anlagebereich zwischen dem Rand des mindestens einen Formraums und der mindestens einen Kammer mindestens eine zweite Dichtung angeordnet sein, um den Raum zwischen dem Laminat (z.B. Folie) sowie der ersten Dichtung, in welcher der Formstempel verlagert wird, im geschlossenen Zustand des Formwerkzeugs besser abzudichten.

In weiteren Ausführungen kann die mindestens eine zweite Dichtung am unteren Rand der mindestens einen Kammer angeordnet sein.

In weiteren Ausführungen können der mindestens eine Formstempel und der mindestens eine Formraum eine im Wesentlichen komplementäre Geometrie aufweisen, wodurch die Verteilung des Laminats (der Folie) im Hinblick auf die Geometrie eines in dem Formraum aufgenommenen Formteils angepasst ist.

In weiteren Ausführungen können der untere Rand der mindestens einen Kammer und der Rand des mindestens einen Formraums im Anlagebereich dazu ausgebildet sein, ein eingebrachtes Laminat mit einem korrespondierenden Randbereich eines Formteils zu verbinden. Im Anlagebereich werden das Laminat (Folie) und der Randbereich des Formteils gegeneinander verpresst, wozu die korrespondierenden Werkzeugbestandteile eine Pressfläche und/oder weitere Einrichtungen aufweisen können. Hierzu können bspw. auch Stanzelemente zählen, welche einen Rand des Formteils zusammen mit der Folie zuschneiden.

In weiteren Ausführungen kann der untere Rand der mindestens einen Kammer beheizbar sein, um das Laminat bzw. die Folie zu erwärmen und damit die Verbindung mit dem Randbereich des Formteils zu unterstützen.

In weiteren Ausführungen kann eine Oberfläche des mindestens einen Formraums mindestes abschnittsweise zur Bereitstellung eines Druckausgleichs ausgebildet sein, so dass die Luft zwischen dem Laminat und einer Oberfläche des Formteils beim Verformen des Laminats, bspw. einer Bewegung in einen Innenraum des Formteils hinein, entweichen kann. Für die Bereitstellung des Druckausgleichs kann die Oberfläche bspw. offenporig ausgebildet sein oder mindestens abschnittsweise Öffnungen aufweisen. Zusätzlich zur Ausbildung der Oberfläche kann auch der Werkzeugkörper im Bereich des mindestens einen Formraums zur Bereitstellung eines Druckausgleichs ausgebildet sein und bspw. Kanäle zum Entweichen von Luft aufweisen. In weiteren Ausführungen kann der Werkzeugkörper im Bereich des mindestens einen Formraums mindestens abschnittsweise bspw. porös ausgebildet sein. Eine poröse Struktur und Kanäle können bspw. einfach in einem additiven Fertigungsverfahren, bspw. mittels 3D-Druck, erzeugt und hergestellt werden.

In weiteren Ausführungen kann die Oberfläche des mindestens einen Formraums eine Vielzahl an Öffnungen aufweisen, die in noch weiteren Ausführungen als Ansaugöffnungen ausgebildet sein können, wobei hierüber Luft zusätzlich aus dem Raum zwischen dem Laminat und dem Formteil durch Bereitstellung eines Unterdrucks abgeführt wird.

In weiteren Ausführungen kann der Bereich der mindestens einen Kammer, in welchem der mindestens eine Formstempel verlagerbar ist, mit einer ersten Einrichtung verbunden sein, über welche ein Überdruck in diesem Bereich erzeugbar ist. Über die erste Einrichtung kann bspw. nach dem Erreichen einer unteren Endlage des mindestens einen Formstempels im Formraum, nachdem die Folie bzw. das Laminat über das "Luftpolster" und den Formstempel fast vollständig gegen die Oberfläche des Formteils bewegt wurde und bereichsweise mit der Oberfläche des Formteils in Kontakt stehen kann, eine finale Druckbeaufschlagung ausgeübt werden, so dass die Folie bzw. das Laminat gegen die Oberfläche des Formteils gedrückt wird und sich mit der Oberfläche verbindet. Bspw. kann in den Bereich der mindestens einen Kammer ein Formdruck im Bereich von 2 bis 12 bar, vorzugsweise im Bereich von 4 bis 10 bar, bevorzugt im Bereich von 6 bis 8 bar erzeugt werden. Hierzu kann die Verbindung zwischen der ersten Einrichtung zum Erzeugen von Überdruck und der mindestens einen Kammer geschlossen sein, solange das Formwerkzeug geöffnet ist und/oder wenn der mindestens eine Formstempel seine untere Endlage nicht eingenommen hat. Erst nach Erreichen der unteren Endlage kann über eine Verbindung hergestellt werden und über die erste Einrichtung wird bspw. Druckluft im Bereich von etwa 8 bar eingebracht. Die eingebrachte Druckluft führt dann zu einem Verbinden des Laminats an der Oberfläche des Formteils. Da das Laminat bereits über das Luftpolster und den Formstempel vorgeformt ist, wenn die Druckbeaufschlagung erfolgt, kommt es zu keiner Ausbildung von Fehlstellen (Blasen, Überlappungen etc.). Die mindestens eine Kammer und/oder der mindestens eine Formstempel können hierzu einen Kanal zum Einbringen von Druckluft (Formluft) aufweisen, der bspw. über ein Ventil oder andere Mittel geöffnet und geschlossen werden kann.

In weiteren Ausführungen können der mindestens eine Formstempel und/oder die Oberfläche des Formraums beheizbar sein. Zum einen kann damit die Prozesstemperatur beim Laminieren im Formraum auf einem erforderlichen Temperaturniveau gehalten und ein Abkühlen des Laminats verhindert werden. Andererseits kann die Verbindung des Laminats mit dem faserhaltigen Material positiv beeinflusst werden, wenn die Temperatur auf einem definierbaren Temperaturniveau gehalten wird und das Formteil zusätzlich getrocknet werden kann.

In weiteren Ausführungen können die mindestens eine erste Dichtung und/oder die mindestens eine zweite Dichtung aus einem Elastomer (Silikon, TPE) bestehen oder aufweisen. In weiteren Ausführungen können die mindestens eine erste Dichtung und/oder die mindestens eine zweite Dichtung als Kolbenringe ausgebildet sein.

In weiteren Ausführungen kann die zur Bereitstellung eines Druckausgleichs ausgebildete Oberfläche des mindestens einen Formraums mit einer zweiten Einrichtung zum Erzeugen eines Unterdrucks verbunden sein, über welche ein Unterdruck im mindestens einen Formraum zum Ansaugen des Laminats bzw. der Folien durch das Formteil hindurch erfolgen kann. In noch weiteren Ausführungen kann die Verteilung und Ausbildung der Öffnungen und somit die Ansaugwirkung an Bereichen der Oberfläche des mindestens einen Formraums unterschiedlich sein, um hierüber Einfluss auf die Verteilung des Laminats zu nehmen. Dies kann bspw. erforderlich sein, um der Verteilung des Laminats bei einer speziellen Geometrie des Formteils Rechnung zu tragen.

Die vorstehend genannte Aufgabe wird nach Anspruch 13 auch durch ein Verfahren zum Laminieren von dreidimensionalen Formteilen aus einem faserhaltigen Material gelöst, wobei mindestens ein formbares Laminat auf eine Oberfläche eines Formteils aufgebracht wird, unter Verwendung eines Formwerkzeugs gemäß einer der vorstehend beschriebenen Ausführungen, mindestens aufweisend folgende Verfahrensschritte:
- Einsetzen mindestens eines Formteils aus einem faserhaltigen Material in mindestens einen Formraum eines Werkzeugkörpers, wobei das Formteil in Anlage mit einer Oberfläche/Formfläche des Formraums in Kontakt tritt,
- Einbringen mindestens eines Laminats, wobei das Laminat auf einen Randbereich des Formteils aufgebracht wird und einen Innenraum des Formteils überspannt,
- Schließen des Formwerkzeugs durch relative Verlagerung des Werkzeugkörpers mit dem mindestens einen Formraum und einer Werkzeugkomponente mit mindestens einer Kammer, in der ein relativ zur Kammer verlagerbarer Formstempel aufgenommen ist, wobei ein unterer Rand der mindestens einen Kammer das Laminat im Randbereich des Formteils gegen das Formteil und einen korrespondierenden Rand des mindestens einen Formraums drückt, und
- Verlagern des mindestens einen Formstempels in der mindestens einen Kammer, wobei über mindestens eine erste Dichtung, die gemeinsam mit dem mindestens einen Formstempel in der Kammer verlagerbar ist, ein Bereich der mindestens einen Kammer, in welchem der mindestens eine Formstempel verlagerbar ist, gegenüber einem restlichen Bereich der mindestens einen Kammer abgedichtet wird, so dass der Druck auf beiden Seiten des Laminats bei der Verlagerung des mindestens einen Formstempels im Wesentlichen konstant gehalten und das Laminat synchron mit der Bewegung des mindestens einen Formstempels gegen das Formteil gedrückt wird.

Die vorstehend beschriebenen Vorteile für das Formwerkzeug gelten in entsprechender Weise auch für ein Verfahren zum Laminieren, wobei die Materialverteilung des Laminats (bspw. eine Folie) gesteuert werden kann.

In weiteren Ausführungen kann das Laminat vor dem Einbringen und/oder dem Schließen des Formwerkzeugs vorgewärmt werden, wobei das Vorwärmen bis zu einem Bereich erfolgt, in dem das Laminat dehnbar ist.

In weiteren Ausführungen kann über mindestens eine erste Einrichtung zur Druckbeaufschlagung in den Bereich der mindestens einen Kammer, in welchem der mindestens eine Formstempel verlagert wird, ein Überdruck in diesem Bereich erzeugt werden (bspw. durch Druckbeaufschlagung und Einbringen von Druckluft), wenn der mindestens eine Formstempel eine untere Endlage erreicht hat. Dabei kann nach einem Vorverformen das Laminat mit hohem Druck (bspw. im Bereich von 6-9 bar) gegen die Innenseite eines Formteils gepresst werden.

Weitere Merkmale, Ausgestaltungen und Vorteile ergeben sich aus der nachfolgenden Darstellung von Ausführungsbeispielen mit Bezug auf die Figuren.

### Kurzbeschreibung der Figuren

In den Zeichnungen zeigt:
- Fig. 1: eine schematische Darstellung eines Ausschnitts eines Formwerkzeugs zum Laminieren von Formteilen aus einem faserhaltigen Material gemäß dem Stand der Technik;
- Fig. 2: eine weitere schematische Darstellung eines Ausschnitts eines Formwerkzeugs zum Laminieren von Formteilen aus einem faserhaltigen Material gemäß dem Stand der Technik;
- Fig. 3: eine schematische Darstellung eines Ausschnitts eines Formwerkzeugs zum Laminieren von Formteilen aus einem faserhaltigen Material gemäß der hierin offenbarten technischen Lehre;
- Fig. 4: eine schematische Darstellung eines Ausschnitts eines Formwerkzeugs zum Laminieren von Formteilen aus einem faserhaltigen Material gemäß der hierin offenbarten technischen Lehre in einer weiteren Ausführungsform; und
- Fig. 5: eine schematische Darstellung eines Verfahrens zum Laminieren von dreidimensionalen Formteilen aus einem faserhaltigen Material.

### Detaillierte Beschreibung von Ausführungsbeispielen

Nachfolgend werden mit Bezug auf die Figuren Ausführungsbeispiele der hierin beschriebenen technischen Lehre dargestellt. Für gleiche Komponenten, Teile und Abläufe werden in der Figurenbeschreibung gleiche Bezugszeichen verwendet. Für die hierin offenbarte technische Lehre unwesentliche oder für einen Fachmann sich erschließende Komponenten, Teile und Abläufe werden nicht explizit wiedergegeben. Im Singular angegebene Merkmale sind auch im Plural mitumfasst, sofern nicht explizit etwas anderes ausgeführt ist. Dies betrifft insbesondere Angaben wie "ein" oder "eine".

### Stand der Technik

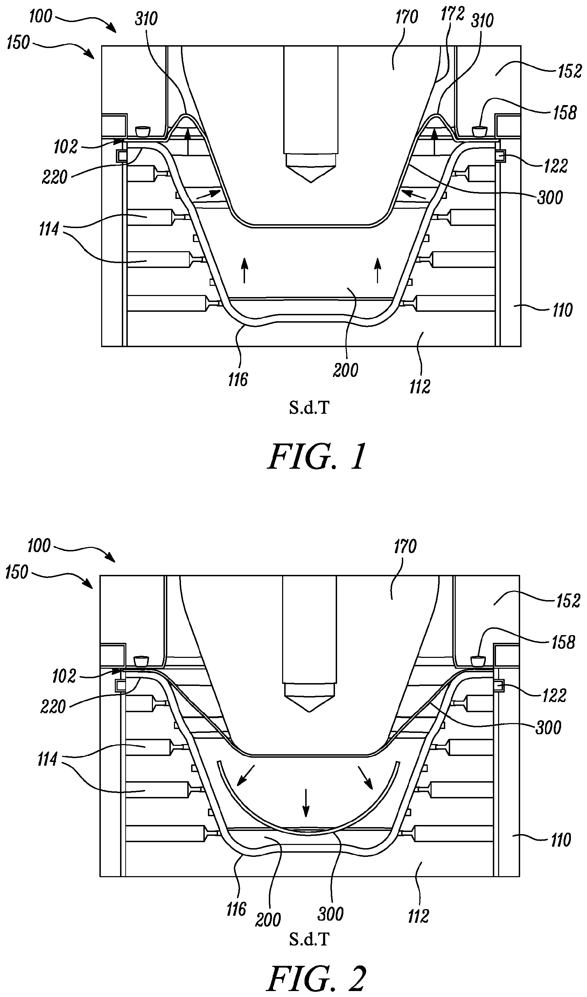

Die Fig. 1 und 2 zeigen schematische Darstellungen eines Ausschnitts eines Formwerkzeugs 100 zum Laminieren von Formteilen 200 aus einem faserhaltigen Material gemäß dem Stand der Technik.

Ein Formwerkzeug 100 kann bspw. einen ersten Werkzeugkörper 110 aufweisen, der mindestens einen einen Formraum 116 aufweisenden Körper 112 aufweist, welcher im gezeigten Ausführungsbeispiel als Kavität ausgebildet ist. Die Formfläche des Formraums 116 weist an ihrer Oberfläche eine Vielzahl an Öffnungen auf, die in Kanäle 114 münden. Die Kanäle 114 münden in einen Raum 120, der über eine dritte Dichtung 122 nach oben hin abgedichtet ist. In der dargestellten Ausführung gemäß dem Stand der Technik steht der Raum 120 mit einer zweiten Einrichtung zum Erzeugen eines Unterdrucks in Verbindung, so dass über die Öffnungen an der Oberfläche des Formraums 116 ein Ansaugen erfolgen kann.

Das Formwerkzeug 100 kann ferner eine Werkzeugkomponente 150 aufweisen, die eine Kammer 154 aufweist, in welcher ein Formstempel 170 aufgenommen ist, der über einen Stab 174 relativ innerhalb der Kammer 154 verlagerbar ist. Am unteren Rand 159 der Werkzeugkomponente 150 ist eine zweite Dichtung 158 angeordnet, die im geschlossenen Zustand des Formwerkzeugs 100, wie in Fig. 1 und 2 gezeigt, die Kammer 154 und den Formraum 116 gegenüber der äußeren Umgebung des Formwerkzeugs 100 im Anlagebereich 102 abdichtet.

Im Formraum 116 ist ein Formteil 200 aus einem faserhaltigen Material aufgenommen, das in einem vorgelagerten Herstellungsschritt gefertigt und in den Formraum 116 eingesetzt wurde. An einem Randbereich 220 des Formteils 200 liegt eine Laminierfolie 300 aus einem Kunststoff (bspw. PP, PE mit einer Dicke im Bereich von 0.1mm bis 1mm, bspw. 0.3 mm) auf. Die Laminierfolie 300 erstreckt sich über den gesamten Innenraum 210 des Formteils 200. In den Darstellungen von Fig. 1 und 2 ist die Laminierfolie 300 dabei über den Formstempel 170 bereits vorgeformt und in den Innenraum 210 verlagert.

Beim Laminieren des Formteils 200 wird gemäß der Ausführung aus dem Stand der Technik über die Oberfläche des Formraums 116 ein Unterdruck erzeugt, wobei durch das Formteil 200 aus faserhaltigem Material hindurch ein Ansaugen der Laminierfolie 300 erfolgt, nachdem das Formwerkzeug 100 geschlossen ist und die Werkzeugkomponente 150 auf dem ersten Werkzeugkörper 110 bzw. dem Körper 112 aufliegt.

Vor dem Ansaugen der Laminierfolie 300 erfolgt eine zusätzliche Auslenkung bzw. Vorformung der Laminierfolie 300 durch eine Verlagerung des Formstempels 170 nach unten in Richtung des Formteils 200. Da ein Druckunterschied zwischen dem Bereich zwischen Laminierfolie 300 und Formteil 200 sowie dem Bereich über der Laminierfolie 300 besteht, wird bei der Verlagerung des Formstempels 170 das Gas oder Gasgemisch verdrängt, was zu einer Verformung der Laminierfolie 300 an den Bereichen führen kann, welche die Ausdehnung bzw. einer Verformung der Laminierfolie 300 nicht behindern. Ähnliche Effekte treten auch dann auf, wenn während der Verlagerung des Formstempels 170 mit einem Ansaugen begonnen wird. In Fig. 1 ist gezeigt, dass es bspw. zu einer Verformung der Laminierfolie 300 nach oben in die Kammer 154 hinein unter Ausbildung von Blasen 310 kommen kann.

Ein Nachteil besteht bei den Ausführungen aus dem Stand der Technik (Fig. 1 und 2) auch darin, dass die Laminierfolie 300 direkt in Kontakt mit der Oberfläche 172 des Formstempels 170 kommt, wobei die Oberflächentemperatur des Formstempels 170 in der Regel geringer ist als die gewünschte Temperatur der Laminierfolie 300, so dass es zu einem ungewollten Abkühlen der Laminierfolie 300 kommt. Dies verschlechtert die Dehneigenschaften der Laminierfolie 300, so dass im folgenden Ansaugvorgang keine ausreichende Verbindung der Laminierfolie 300 mit der inneren Oberfläche des Formteils 200 erfolgen kann.

Wie in Fig. 2 weiter schematisch gezeigt, kann es bei auch zu einer ungleichmäßigen Verteilung der Laminierfolie 300 kommen, wobei Bereiche der Laminierfolie 300 zuerst in Kontakt mit dem faserhaltigen Material des Formteils 200 kommen. Dabei erfolgt dort zuerst eine Verbindung der erwärmten Laminierfolie 300, was zu einem zusätzlichen Dehnen der Laminierfolie 300 in den angrenzenden Bereichen führt. Ein zusätzliches Dehnen begünstigt die Ausbildung von Schwachstellen und kann auch zu einem Reißen der Laminierfolie 300 führen.

### Erfindungsgemäße Ausführungen

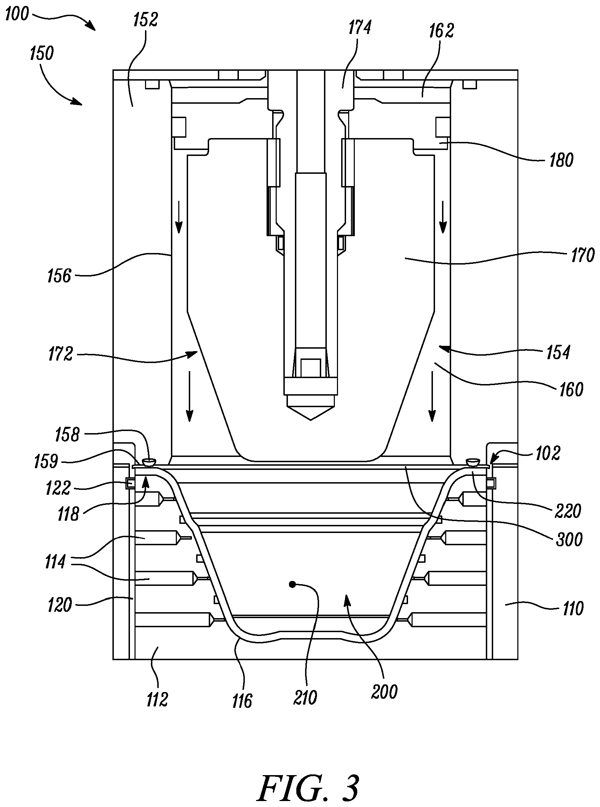

Fig. 3 zeigt eine schematische Darstellung eines Ausschnitts eines Formwerkzeugs 100 zum Laminieren von Formteilen 200 aus einem faserhaltigen Material gemäß der hierin offenbarten technischen Lehre, wobei durch die Integration einer ersten Dichtung 180 die Nachteile des Stands der Technik behoben werden. In Fig. 3 wird gegenüber den Ausführungen der Fig. 1 und 2 im Wesentlichen nur auf die Unterschiede eingegangen, welche die Vorteile gegenüber dem Stand der Technik bereitstellen.

Wie in Fig. 3 gezeigt, ist an einem Formstempel 170 eine erste Dichtung 180 angeordnet, welche die Kammer 154 in zwei Bereiche unterteilt. Ein erster Bereich 160 befindet sich dabei zwischen der ersten Dichtung 180 und einer eingebrachten Laminierfolie 300. Ein zweiter Bereich 162 befindet sich über der ersten Dichtung 180 und kann bspw. mit der Umgebung in Kontakt stehen.

Die erste Dichtung 180 ist in dem gezeigten Ausführungsbeispiel direkt über dem Formstempel 170 angeordnet. In weiteren Ausführungen kann die erste Dichtung 180 auch direkt an einem Formstempel 170 oder über einem Formstempel 170 angeordnet sein. Die Ausführung von Fig. 3 zeigt eine erste Dichtung 180 mit zwei äußeren Dichtlippen, die an der Seitenwand 156 der Kammer 154 anliegen. Für die Bereitstellung der Dichtung bei häufiger Bewegung an der Seitenwand 156 kann diese mit einem geeigneten Mittel beschichtet sein. Ferner kann in dem Raum zwischen den beiden Dichtlippen ein Schmiermittel enthalten sein, welches eine Dichtwirkung der ersten Dichtlippe 180 unterstützt. Die erste Dichtung 180 kann wie die mindestens eine zweite Dichtung 158 und die mindestens eine dritte Dichtung 122 aus einem Silikonmaterial oder TPE bestehen. In weiteren Ausführungen können auch anderen flexible Elemente als Dichtmaterial für die verschiedenen Dichtungen des Formwerkzeugs 100 zum Einsatz kommen. Der Formstempel 170 selbst kann aus einem Metall bzw. einer Metalllegierung oder einem Kunststoff bestehen, der die erforderlichen Eigenschaften im Hinblick auf Temperaturbeständigkeit und Hafteigenschaften aufweist. Der Stab 174, über den der Formstempel 170 in der Werkzeugkomponente 150 verlagert wird, kann wie ein Werkzeugkörper 152 der Werkzeugkomponente 150 und der erste Werkzeugkörper 110 und der mindestens eine Körper 112 aus einem Metall oder einer Metalllegierung bestehen.

Die erste Dichtung 180 sorgt dafür, dass es zu keinem Druckunterschied zwischen dem ersten Bereich 160 über der Laminierfolie 300 im geschlossenen Zustand des Formwerkzeugs 100 und dem Innenraum 210 unter der Laminierfolie 300 kommt. Die Verformung der Laminierfolie 300 folgt dabei der Verlagerung des Formstempels 170 und dessen Kontur an der Oberfläche 172, wobei sich eine Art "Luftpolster" an der Oberfläche 172 des Formstempels 170 im ersten Bereich 160 der Kammer 154 ausbilden kann. Da der erste Bereich 160 auch durch die Position der ersten Dichtung 180 definiert wird, wandert der erste Bereich 160 bei der Bewegung des Formstempels 170 nach unten. Bei der Verlagerung des Formstempels 170 und des Luftpolsters kommt es dabei zu einer gleichmäßigen Verteilung der Laminierfolie 300. Damit kann die Laminierfolie 300 über die gesamte innere Fläche des Formteils 200 verteilt werden, ohne dass es zu Blasen, Falten oder Löchern in der Laminierfolie 300 kommt. Insbesondere kann die Laminierfolie 300 bei der Verlagerung des Formstempels 170 nicht nach oben ausweichen, weil der Druck im ersten Bereich 160 der Kammer 154 einer Verformung über die gesamte Fläche der Laminierfolie 300 entgegenwirkt.

In weiteren Ausführungen kann ein Formwerkzeug 100 auch mehrere Köper 112 mit einem Formraum 116 aufweisen, die in entsprechenden Aufnahmen eines ersten Werkzeugkörpers 110 aufgenommen sind. Eine Werkzeugkomponente 150 des Formwerkzeugs 100 (bspw. ein Oberwerkzeug) weist in solchen Ausführungen eine entsprechende Anzahl an Kammern 154 auf, in welchen Formstempel 170 aufgenommen sind. Damit können in einem Schritt gleichzeitig mehrere Formteile 200 laminiert werden. In weiteren Ausführungen können die Körper 112 und Formstempel 170 ausgetauscht werden, um ein Laminieren von Formteilen 200 mit einer anderen Geometrie in einem Formwerkzeug 100 zu ermöglichen. In weiteren Ausführungen kann dabei anstelle der Laminierung einer Innenseite, wie in Fig. 3 gezeigt, ein Laminieren einer Außenseite eines Formteils 200 erfolgen, wobei hierzu ein Formstempel bspw. schalenartig (analog zur Ausbildung des Formraums 116 von Fig. 3) ausgebildet sein kann, während das Formteil auf einem stempelartigen Körper aufliegt.

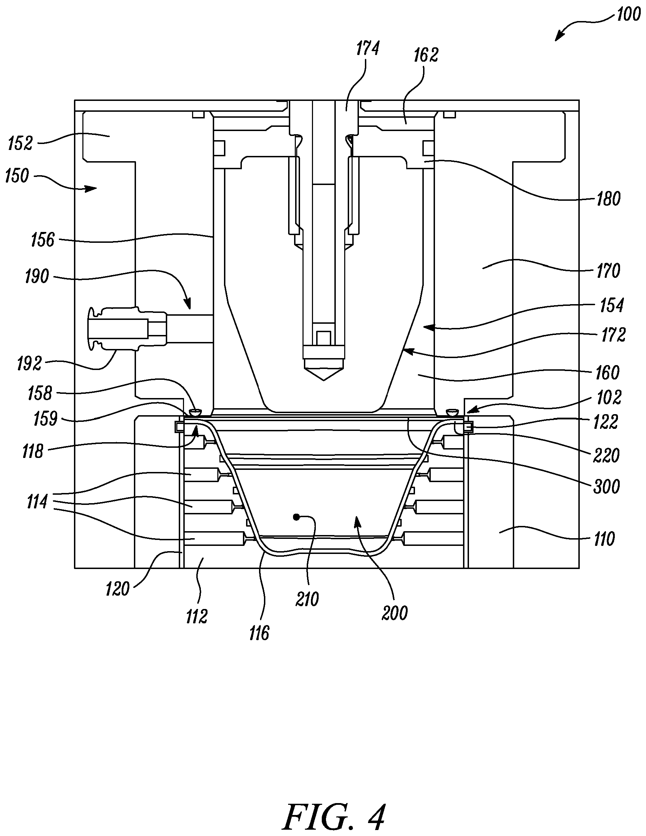

Über die Kanäle 114 erfolgt bei der in Fig. 3 gezeigten Ausführung ein Entweichen der Luft zwischen der Laminierfolie 300 und dem Formteil 200 durch das Formteil 200 hindurch. Ein Ansaugen der Laminierfolie 300, wie im Stand der Technik zwingend erforderlich, ist bei den vorgestellten Ausführungen (Fig. 3 und 4) nicht notwendig. Die Verlagerung der Laminierfolie 300 und das Verbinden der Laminierfolie 300 mit der Innenseite des Formteils 200 erfolgt in dem Ausführungsbeispiel von Fig. 3 nur über das Luftpolster im ersten Bereich 160 und den Formstempel 170.

Der Raum 120 kann in weiteren Ausführungen mit einer zweiten Einrichtung zum Erzeugen eines Unterdrucks in Verbindung stehen, so dass über die Öffnungen an der Oberfläche des Formraums 116 ein Ansaugen erfolgen kann, um bspw. das Entweichen der Luft zwischen einer Laminierfolie 300 und einem Formteil 200 beim Laminieren zu unterstützen.

Fig. 4 zeigt eine schematische Darstellung eines Ausschnitts eines Formwerkzeugs 100 zum Laminieren von Formteilen 200 aus einem faserhaltigen Material gemäß der hierin offenbarten technischen Lehre in einer weiteren Ausführungsform.

Im Unterschied zu der Darstellung der Ausführung von Fig. 3 weist der zweite Werkzeugkörper 152 eine Kanal 190 auf, der in den ersten Bereich 160 der Kammer 154 ragt. Der Kanal 190 ist über einen Anschluss 192 mit einer ersten Einrichtung zum Einbringen von Druckluft, bspw. im Bereich von 6 bis 9 bar, verbunden. Im Zustand des Formwerkzeugs 100, der in Fig. 4 gezeigt ist, befindet sich der Formstempel 170 in einer Ausgangsstellung. Dabei ist die Verbindung zu der ersten Einrichtung über die erste Einrichtung selbst, ein Ventil oder dergleichen unterbrochen, so dass kein Druckausgleich zwischen dem ersten Bereich 160 und der Umgebung besteht. D.h. der erste Bereich 160 ist abgedichtet. Anschließend kann der Formstempel 170 nach unten in Richtung des Formraums 116 bewegt werden, wodurch die Laminierfolie 300 über das "Luftpolster" im ersten Bereich 160 und den Formstempel 170 nach unten gegen das Formteil 200 bewegt wird. Nachdem der Formstempel 170 seine untere Endlage erreicht hat, wird über die erste Einrichtung Druckluft, bspw. mit 8 bar, in den ersten Bereich 160 eingebracht und die Laminierfolie 300 wird hierüber final gegen die innere Oberfläche des Formteils 200 gedrückt und mit dieser verbunden. Hierzu kann bspw. ein Ventil oder dergleichen geöffnet werden, um die Druckbeaufschlagung zu ermöglichen.

In der unteren Endlage besteht ein geringer Abstand zwischen der Oberfläche 172 des Formstempels 170 und der inneren Oberfläche des Formteils 200. Ja nach Ausbildung und Dimensionierung des Formwerkzeugs 100 sowie eines Formteils 200 kann in der unteren Endlage ein Abstand zwischen der Oberfläche 172 und dem Formteil 200 im Bereich von 2 bis 20 mm bestehen, wobei der Abstand abhängig vom Tiefziehverhältnis des herzustellenden Produkts bzw. Formteils ist.

Der Kanal 190 ragt unabhängig von der Position des Formstempels 170 stets in den ersten Bereich 160 und ist damit entsprechend anzuordnen. In noch weiteren nicht dargestellten Ausführungen ist es auch möglich, dass ein Kanal zum Einbringen von Druckluft für einen finalen Laminierschritt im Formstempel 170 verläuft und in den ersten Bereich 160 ragt.

In noch weiteren Ausgestaltungen können mehrere Öffnungen vorgesehen sein, die mit einer ersten Einrichtung über mindestens einen Kanal 190 oder mehrere Kanäle 190 verbunden sind. Die erste Einrichtung kann bspw. einen Kompressor und/oder einen Drucklufttank aufweisen. In noch weiteren Ausführungen kann der mindestens eine Kanal 190, die erste Einrichtung und/oder die Kammer 154 ein Ventil oder eine andere Vorrichtung aufweisen, die nach der Druckbeaufschlagung ein Entlüften bereitstellen, so dass ein Druckausgleich zwischen dem ersten Bereich 160 und der Umgebung des Formwerkzeugs 100 bereitgestellt wird.

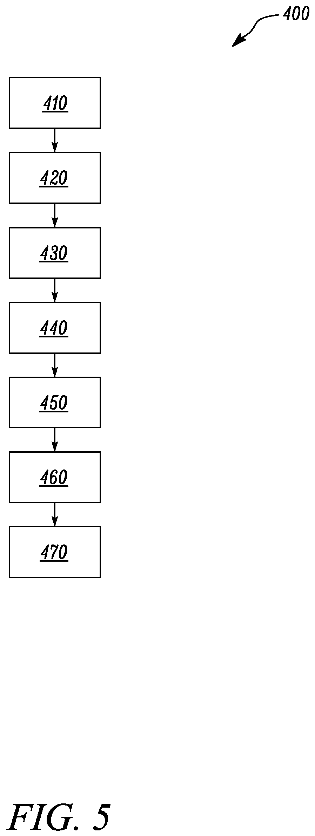

Fig. 5 zeigt eine schematische Darstellung eines Verfahrens 400 zum Laminieren von dreidimensionalen Formteilen 200 aus einem faserhaltigen Material gemäß der hierin beschrieben Lehre.

In einem ersten optionalen Schritt weist das Verfahren 400 einen Herstellungsschritt 410 auf. Dabei können Formteile 200 in einem Dry-Fiber-Umformverfahren aus einem Airlaid oder bspw. mehreren übereinanderliegenden Papierschichten geformt werden. Alternativ können Formteile 200 aus einem nassen Faserbrei verpresst werden.

Anschließend erfolgt ein Einsetzen 420 eines zuvor gefertigten Formteils 200 in ein geöffnetes Formwerkzeug 100, wie bspw. in Fig. 3 oder 4 gezeigt, wobei das Formteil 200 in eine Kavität eingesetzt wird, welche die äußere (oder innere) Geometrie des Formteils 200 abbildet.

Danach erfolgt ein Einbringen 430 einer Laminierfolie 300, die in einem vorgelagerten Schritt in einer separaten Station vorgewärmt wird. Das Vorwärmen erfolgt auf eine Temperatur, welche eine Verformung durch die Bewegung eines Formstempels 170 erlaubt.

Beim Einbringen wird die Laminierfolie 300 so zu dem Formteil 200 ausgerichtet, dass ein Rand der Laminierfolie 300 auf einem Randbereich 220 des Formteils 200 zu liegen kommt. Das Einbringen der Laminierfolie 300 kann bspw. für mehrere Formräume 116 eines Formwerkzeugs 100 gemeinsam erfolgen, wobei die Laminierfolien 300 vereinzelt zugeführt werden. In weiteren Ausführungen kann auch eine Folienbahn aus Laminierfolie 300 zwischen den Werkzeugkörper 110 und die Werkzeugkomponente 150 eingebracht werden. Beim Schließen des Formwerkzeugs 100 durch eine relative Verlagerung des Werkzeugkörpers 110 und der Werkzeugkomponente 150 kann durch zusätzliche Stanzelemente ein Trennen von einzelnen Laminierfolien 300 aus der Folienbahn erfolgen. Hierzu können bspw. an einem Oberwerkzeug, wie der Werkzeugkomponente 150, Stanzmesser vorgesehen sein. In noch weiteren Ausführungen können in einer Folienbahn Bereiche vorgestanzt sein, wobei dann beim Schließen des Formwerkzeugs 100 nur die verbleibenden Halteverbindungen zwischen den einzelnen Laminierfolien 300 und der Folienbahn getrennt werden.

Nachdem die Laminierfolie 300 auf dem Randbereich 220 des Formteils 200 abgelegt wurde, erfolgt das Schließen 440 des Formwerkzeugs 100. Dabei wird die Laminierfolie 300 im Anlagebereich 102 zwischen dem unteren Rand 159 der Kammer 154 bzw. der Werkzeugkomponente 150 und einem Rand 118 des Formraums 116 gegen den Randbereich 220 des Formteils 200 gedrückt. Die Laminierfolie 300 wird somit beim Schließen des Formwerkzeugs 100 mit dem Randbereich 220 verbunden. Der restliche Teil der Laminierfolie 300 überspannt im geschlossenen Zustand des Formwerkzeugs 100 den Innenraum 210 des Formteils 200.

Nachdem das Formwerkzeug 100 geschlossen ist, beginnt ein Verlagern 450 des Formstempels 170. Der Formstempel 170 ist über eine erste Dichtung 180 gegenüber der Umgebung und der restlichen Werkzeugkomponente 150 abgedichtet, so dass es zu keinem Gasaustauch kommt. Im Weiteren ist der erste Bereich 160 in der Kammer 154 nach unten über die Laminierfolie 300 geschlossen, die über die zweite Dichtung 158 gegenüber der Umgebung abgedichtet ist.

Die Bewegung des Formstempels 170 ermöglicht durch die Abdichtung des ersten Bereichs 160 der Kammer 154, dass zu beiden Seiten der Laminierfolie 300 ein im Wesentlichen gleicher Druck vorherrscht, so dass es zu keinen Beulen oder anderen Fehlstellen in der Laminierfolie 300 kommt und die Laminierfolie 300 gleichmäßig über die innere Oberfläche des Formteils 200 verteilt wird. Ferner wirkt über die gesamte Oberfläche der Laminierfolie 300 ein gleichmäßiger Druck nach unten, so dass es zu keinen Beulen (siehe Fig. 1) oder dergleichen an der Oberfläche der Laminierfolie 300 kommen kann. Die Laminierfolie 300 wird damit gleichmäßig nach unten in Richtung der Innenseite des Formteils 200 gebracht. Bei der Bewegung des Formstempels 170 in Richtung eines Formraums 116 wird die Laminierfolie 300 durch das im ersten Bereich 160 bestehende "Luftpolster" und den Formstempel 170 verformt, wobei dabei der Kontakt zwischen der Oberfläche 172 des Formstempels 170 und der Laminierfolie 300 miniert ist.

In einer Ausführung kann dabei die Laminierfolie 300 vollständig durch das "Luftpolster" und den Formstempel 170 gegen die Oberfläche des Formteils 200 gepresst werden. In einer weiteren Ausführung, wie vorstehend für die Ausführung von Fig. 4 beschrieben, kann nach dem Erreichen einer unteren Endlage des Formstempels 170 eine Druckbeaufschlagung des ersten Bereichs 160 erfolgen, wobei hierüber die Laminierfolie 300 final gegen die Oberfläche des Formteils 200 gedrückt und mit dieser verbunden wird. Die zwischen der Laminierfolie 300 und der Oberfläche des Formteils 200 befindliche Luft wird durch das faserhaltige Material des Formteils 200 gedrückt und kann über Öffnungen im Formraum 116 entweichen. Nach dem finalen Laminierschritt kann vor einem Öffnen des Formwerkzeugs 100 ein Entlüften des ersten Bereichs 160 erfolgen.

In weiteren Ausführungen kann zeitgleich mit der Verlagerung 450 des Formstempels 170 oder zeitlich versetzt ein Ansaugen über Kanäle 114 und Öffnungen an der Oberfläche des Formraums 116 zur Erzeugung eines Unterdrucks erfolgen, wobei die Laminierfolie 300 gegen die innere Oberfläche des Formteils 200 gesogen und/oder das Ausbringen der Luft zwischen der Laminierfolie 300 und dem Formteil 200 unterstützt wird. Für das Laminieren selbst ist das Ansaugen jedoch nicht zwingend notwendig, sondern unterstützt lediglich das Entweichen der Luft.

Nachdem die Laminierfolie 300 vollständig mit der inneren Oberfläche des Formteils 200 in Kontakt gekommen ist und sich damit verbunden hat, fährt der Formstempel 170 wieder zurück in seine Ausgangsstellung und das Formwerkzeug 100 wird geöffnet 460. Anschließend erfolgt ein Entnehmen oder Auswerfen 470 des laminierten Formteils 200 aus dem Formwerkzeug 100 über Auswerfer oder separate Entnahmewerkzeuge mit Greifern oder Saugnäpfen. Danach können die laminierten Formteile 200 einer weiteren Bearbeitung oder Verwendung zugeführt werden.

Vorteilhaft wird durch die vorgestellte Lösung das Laminieren von Formteilen 200 aus einem faserhaltigen Material wesentlich verbessert, weil die Verbindung zwischen einer Laminierfolie 300 und der Oberfläche eines Formteils 200 über die gesamte Fläche ohne Fehlstellen mit gleichbleibender Verbindungseigenschaft und Schichtdicke erfolgen kann.

### Bezugszeichenliste

- 100: Formwerkzeug
- 102: Anlagebereich
- 110: Werkzeugkörper
- 112: Körper
- 114: Kanal
- 116: Formraum
- 118: Rand
- 120: Raum
- 122: dritte Dichtung
- 150: Werkzeugkomponente
- 152: Werkzeugkörper
- 154: Kammer
- 156: Seitenwand
- 158: zweite Dichtung
- 159: unterer Rand
- 160: erster Bereich
- 162: zweiter Bereich
- 170: Formstempel
- 172: Oberfläche
- 174: Stab
- 180: erste Dichtung
- 190: Kanal
- 192: Anschluss
- 200: Formteil
- 210: Innenraum
- 220: Randbereich
- 300: Laminierfolie
- 310: Blase
- 400: Verfahren
- 410-470: Verfahrensschritte

## Patentansprüche

1. Anordnung zum Laminieren von dreidimensionalen Formteilen (200) aus einem faserhaltigen Material, wobei mindestens ein formbares Laminat auf eine Oberfläche (172) eines Formteils (200) aufgebracht wird, umfassend
- ein Formwerkzeug (100) aufweisend einen Werkzeugkörper (110) mit mindestens einem Formraum (116), in welchen ein Formteil (200) aus faserhaltigem Material einsetzbar ist, und eine Werkzeugkomponente (150) mit mindestens einem relativ zum Formraum (116) verlagerbaren Formstempel (170), der in mindestens einer Kammer (154) der Werkzeugkomponente (150) verlagerbar aufgenommen ist, wobei der Werkzeugkörper (110) und die Werkzeugkomponente (150) so zueinander in Anlage bringbar sind, dass ein unterer Rand (159) der mindestens einen Kammer (154) in einem Anlagebereich (102) gegen einen Rand (118) des mindestens einen Formraums (116) drückt, und wobei der mindestens eine verlagerbare Formstempel (170) in der mindestens einen Kammer (154) mit mindestens einer ersten Dichtung (180) in Verbindung steht, die gemeinsam mit dem mindestens einen Formstempel (170) in der Kammer(154) verlagerbar ist und einen Bereich (160) der mindestens einen Kammer (154), in welchem der mindestens eine Formstempel (170) verlagerbar ist, gegenüber einem restlichen Bereich (162) der mindestens einen Kammer (154) abdichtet,
- das mindestens eine dreidimensionale Formteil (200) aus faserhaltigem Material, das in den mindestens einen Formraum (116) des Werkzeugkörpers (110) einsetzbar ist, und
- mindestens ein formbares Laminat (300), das dazu vorgesehen ist, auf die Oberfläche des Formteils (200) aufgebracht zu werden.

2. Anordnung nach Anspruch 1, wobei im Anlagebereich (102) zwischen dem Rand (118) des mindestens einen Formraums (116) und der mindestens einen Kammer (154) mindestens eine zweite Dichtung (158) angeordnet ist.

3. Anordnung nach Anspruch 2, wobei die mindestens eine zweite Dichtung (158) am unteren Rand (159) der mindestens einen Kammer (154) angeordnet ist.

4. Anordnung nach einem der Ansprüche 1 bis 3, wobei der mindestens eine Formstempel (170) und der mindestens eine Formraum (116) eine im Wesentlichen komplementäre Geometrie aufweisen.

5. Anordnung nach einem der Ansprüche 1 bis 4, wobei der untere Rand (159) der mindestens einen Kammer (154) und der Rand (118) des mindestens einen Formraums (116) im Anlagebereich (102) dazu ausgebildet sind ein eingebrachtes Laminat (300) mit einem korrespondierenden Randbereich (220) eines Formteils (200) zu verbinden.

6. Anordnung nach einem der Ansprüche 1 bis 5, wobei der untere Rand (159) der mindestens einen Kammer (154) beheizbar ist.

7. Anordnung nach einem der Ansprüche 1 bis 6, wobei eine Oberfläche (172) des mindestens einen Formraums (116) mindestes abschnittsweise zur Bereitstellung eines Druckausgleichs ausgebildet ist.

8. Anordnung nach Anspruch 7, wobei die Oberfläche (172) des mindestens einen Formraums (116) eine Vielzahl an Öffnungen aufweist.

9. Anordnung nach einem der Ansprüche 1 bis 8, wobei der Bereich (160) der mindestens einen Kammer (154), in welchem der mindestens eine Formstempel (170) verlagerbar ist, mit einer ersten Einrichtung verbunden ist, über welche ein Überdruck in diesem Bereich (160) erzeugbar ist.

10. Anordnung nach einem der Ansprüche 1 bis 9, wobei der mindestens eine Formstempel (170) und/oder die Oberfläche (172) des mindestens einen Formraums (116) beheizbar sind.

11. Anordnung nach einem der Ansprüche 1 bis 10, wobei die mindestens eine erste Dichtung (180) und/oder die mindestens eine zweite Dichtung (158) aus einem Elastomer (Silikon, TPE) besteht oder aufweist.

12. Anordnung nach einem der Ansprüche 7 bis 11, wobei die zur Bereitstellung eines Druckausgleichs ausgebildete Oberfläche (172) des mindestens einen Formraums (116) mit einer zweiten Einrichtung zum Erzeugen eines Unterdrucks verbunden ist.

13. Verfahren (400) zum Laminieren von dreidimensionalen Formteilen (200) aus einem faserhaltigen Material, wobei mindestens ein formbares Laminat (300) auf eine Oberfläche (172) eines Formteils (200) aufgebracht wird, unter Verwendung eines Formwerkzeugs (100) nach einem der Ansprüche 1 bis 12, mindestens aufweisend:
- Einsetzen mindestens eines Formteils (200) aus einem faserhaltigen Material in mindestens einen Formraum (116) eines Werkzeugkörpers (110), wobei das Formteil (200) in Anlage mit einer Oberfläche/Formfläche (172) des Formraums (116) in Kontakt tritt,
- Einbringen mindestens eines Laminats (300), wobei das Laminat (300) auf einen Randbereich (220) des Formteils (200) aufgebracht wird und einen Innenraum (210) des Formteils (200) überspannt,
- Schließen des Formwerkzeugs (100) durch relative Verlagerung des Werkzeugkörpers (110) mit dem mindestens einen Formraum (116) und einer Werkzeugkomponente (150) mit mindestens einer Kammer (154), in der ein relativ zur Kammer (154) verlagerbarer Formstempel (170) aufgenommen ist, wobei ein unterer Rand (159) der mindestens einen Kammer (154) das Laminat (300) im Randbereich (220) des Formteils (200) gegen das Formteil (200) und einen korrespondierenden Rand (118) des mindestens einen Formraums (116) drückt, und
- Verlagern des mindestens einen Formstempels (170) in der mindestens einen Kammer (154), wobei über mindestens eine erste Dichtung (180), die gemeinsam mit dem mindestens einen Formstempel (170) in der Kammer (154) verlagerbar ist, ein Bereich (160) der mindestens einen Kammer (154), in welchem der mindestens eine Formstempel (170) verlagerbar ist, gegenüber einem restlichen Bereich (162) der mindestens einen Kammer (154) abgedichtet wird, so dass der Druck auf beiden Seiten des Laminats (300) bei der Verlagerung des mindestens einen Formstempels (170) im Wesentlichen konstant gehalten und das Laminat (300) synchron mit der Bewegung des mindestens einen Formstempels (170) gegen das Formteil (200) gedrückt wird.

14. Verfahren (400) nach Anspruch 13, wobei über mindestens eine erste Einrichtung zur Druckbeaufschlagung in den Bereich (160) der mindestens einen Kammer (154), in welchem der mindestens eine Formstempel (170) verlagerbar ist, ein Überdruck in diesem Bereich (160) erzeugt wird, wenn der mindestens eine Formstempel (170) eine untere Endlage erreicht hat.

## Claims

1. Arrangement for laminating three-dimensional molded parts (200) from a fiber-containing material, wherein at least one formable laminate is applied to a surface (172) of a molded part (200), comprising
- a molding tool (100) having a tool body (110) with at least one mold cavity (116), into which a molded part (200) of fiber-containing material can be inserted, and a tool component (150) with at least one forming punch (170) displaceable relative to the mold cavity (116), which is displaceably received in at least one chamber (154) of the tool component (150), wherein the tool body (110) and the tool component (150) can be brought into abutment with one another such that a lower edge (159) of the at least one chamber (154) presses, in an abutment region (102), against an edge (118) of the at least one mold cavity (116), and wherein the at least one displaceable forming punch (170) in the at least one chamber (154) is in connection with at least one first seal (180) which is displaceable together with the at least one forming punch (170) in the chamber (154) and which seals off a region (160) of the at least one chamber (154), in which the at least one forming punch (170) is displaceable, with respect to a remaining region (162) of the at least one chamber (154),
- the at least one three-dimensional molded part (200) of fiber-containing material, which can be inserted into the at least one mold cavity (116) of the tool body (110), and
- at least one formable laminate (300) which is intended to be applied to the surface of the molded part (200).

2. Arrangement according to claim 1, wherein at least one second seal (158) is arranged in the abutment region (102) between the edge (118) of the at least one mold cavity (116) and the at least one chamber (154).

3. Arrangement according to claim 2, wherein the at least one second seal (158) is arranged at the lower edge (159) of the at least one chamber (154).

4. Arrangement according to any one of claims 1 to 3, wherein the at least one forming punch (170) and the at least one mold cavity (116) have a substantially complementary geometry.

5. Arrangement according to any one of claims 1 to 4, wherein the lower edge (159) of the at least one chamber (154) and the edge (118) of the at least one mold cavity (116) are configured, in the abutment region (102), to join an introduced laminate (300) to a corresponding edge region (220) of a molded part (200).

6. Arrangement according to any one of claims 1 to 5, wherein the lower edge (159) of the at least one chamber (154) is heatable.

7. Arrangement according to any one of claims 1 to 6, wherein a surface (172) of the at least one mold cavity (116) is configured, at least in sections, to provide a pressure equalization.

8. Arrangement according to claim 7, wherein the surface (172) of the at least one mold cavity (116) has a plurality of openings.

9. Arrangement according to any one of claims 1 to 8, wherein the region (160) of the at least one chamber (154), in which the at least one forming punch (170) is displaceable, is connected to a first device by means of which an overpressure can be generated in this region (160).

10. Arrangement according to any one of claims 1 to 9, wherein the at least one forming punch (170) and/or the surface (172) of the at least one mold cavity (116) are heatable.

11. Arrangement according to any one of claims 1 to 10, wherein the at least one first seal (180) and/or the at least one second seal (158) consists of or comprises an elastomer (silicone, TPE).

12. Arrangement according to any one of claims 7 to 11, wherein the surface (172) of the at least one mold cavity (116), which is configured to provide a pressure equalization, is connected to a second device for generating a negative pressure.

13. Method (400) for laminating three-dimensional molded parts (200) from a fiber-containing material, wherein at least one formable laminate (300) is applied to a surface (172) of a molded part (200), using a molding tool (100) according to any one of claims 1 to 12, at least comprising:
- inserting at least one molded part (200) of fiber-containing material into at least one mold cavity (116) of a tool body (110), wherein the molded part (200) comes into abutting contact with a surface/molding surface (172) of the mold cavity (116),
- introducing at least one laminate (300), wherein the laminate (300) is applied to an edge region (220) of the molded part (200) and spans an interior (210) of the molded part (200),
- closing the molding tool (100) by relative displacement of the tool body (110) with the at least one mold cavity (116) and a tool component (150) with at least one chamber (154), in which a forming punch (170) displaceable relative to the chamber (154) is received, wherein a lower edge (159) of the at least one chamber (154) presses the laminate (300), in the edge region (220) of the molded part (200), against the molded part (200) and a corresponding edge (118) of the at least one mold cavity (116), and
- displacing the at least one forming punch (170) in the at least one chamber (154), wherein, by means of at least one first seal (180) which is displaceable together with the at least one forming punch (170) in the chamber (154), a region (160) of the at least one chamber (154), in which the at least one forming punch (170) is displaceable, is sealed off with respect to a remaining region (162) of the at least one chamber (154), such that the pressure on both sides of the laminate (300) is kept substantially constant during the displacement of the at least one forming punch (170) and the laminate (300) is pressed against the molded part (200) synchronously with the movement of the at least one forming punch (170).

14. Method (400) according to claim 13, wherein, by means of at least one first device for applying pressure to the region (160) of the at least one chamber (154) in which the at least one forming punch (170) is displaceable, an overpressure is generated in this region (160) when the at least one forming punch (170) has reached a lower end position.

## Revendications

1. Agencement pour laminer des pièces moulées tridimensionnelles (200) en un matériau contenant des fibres, au moins un laminé formable étant appliqué sur une surface (172) d'une pièce moulée (200), comprenant
- un outil de moulage (100) présentant un corps d'outil (110) avec au moins une cavité de moulage (116), dans laquelle une pièce moulée (200) en matériau contenant des fibres peut être insérée, et un composant d'outil (150) avec au moins un poinçon de moulage (170) déplaçable par rapport à la cavité de moulage (116), lequel est reçu de manière déplaçable dans au moins une chambre (154) du composant d'outil (150), le corps d'outil (110) et le composant d'outil (150) pouvant être amenés en appui l'un contre l'autre de telle sorte qu'un bord inférieur (159) de ladite au moins une chambre (154) presse, dans une région d'appui (102), contre un bord (118) de ladite au moins une cavité de moulage (116), et ledit au moins un poinçon de moulage (170) déplaçable étant en liaison, dans ladite au moins une chambre (154), avec au moins un premier joint d'étanchéité (180) qui est déplaçable conjointement avec ledit au moins un poinçon de moulage (170) dans la chambre (154) et qui rend étanche une région (160) de ladite au moins une chambre (154), dans laquelle ledit au moins un poinçon de moulage (170) est déplaçable, par rapport à une région restante (162) de ladite au moins une chambre (154),
- ladite au moins une pièce moulée tridimensionnelle (200) en matériau contenant des fibres, qui peut être insérée dans ladite au moins une cavité de moulage (116) du corps d'outil (110), et
- au moins un laminé formable (300), qui est prévu pour être appliqué sur la surface de la pièce moulée (200).

2. Agencement selon la revendication 1, dans lequel au moins un deuxième joint d'étanchéité (158) est disposé dans la région d'appui (102) entre le bord (118) de ladite au moins une cavité de moulage (116) et ladite au moins une chambre (154).

3. Agencement selon la revendication 2, dans lequel ledit au moins un deuxième joint d'étanchéité (158) est disposé au niveau du bord inférieur (159) de ladite au moins une chambre (154).

4. Agencement selon l'une quelconque des revendications 1 à 3, dans lequel ledit au moins un poinçon de moulage (170) et ladite au moins une cavité de moulage (116) présentent une géométrie sensiblement complémentaire.

5. Agencement selon l'une quelconque des revendications 1 à 4, dans lequel le bord inférieur (159) de ladite au moins une chambre (154) et le bord (118) de ladite au moins une cavité de moulage (116) sont conçus, dans la région d'appui (102), pour relier un laminé introduit (300) à une région de bord correspondante (220) d'une pièce moulée (200).

6. Agencement selon l'une quelconque des revendications 1 à 5, dans lequel le bord inférieur (159) de ladite au moins une chambre (154) peut être chauffé.

7. Agencement selon l'une quelconque des revendications 1 à 6, dans lequel une surface (172) de ladite au moins une cavité de moulage (116) est conçue, au moins par sections, pour fournir une compensation de pression.

8. Agencement selon la revendication 7, dans lequel la surface (172) de ladite au moins une cavité de moulage (116) présente une pluralité d'ouvertures.

9. Agencement selon l'une quelconque des revendications 1 à 8, dans lequel la région (160) de ladite au moins une chambre (154), dans laquelle ledit au moins un poinçon de moulage (170) est déplaçable, est reliée à un premier dispositif au moyen duquel une surpression peut être générée dans cette région (160).

10. Agencement selon l'une quelconque des revendications 1 à 9, dans lequel ledit au moins un poinçon de moulage (170) et/ou la surface (172) de ladite au moins une cavité de moulage (116) peuvent être chauffés.

11. Agencement selon l'une quelconque des revendications 1 à 10, dans lequel ledit au moins un premier joint d'étanchéité (180) et/ou ledit au moins un deuxième joint d'étanchéité (158) est constitué d'un élastomère (silicone, TPE) ou en comporte.

12. Agencement selon l'une quelconque des revendications 7 à 11, dans lequel la surface (172) de ladite au moins une cavité de moulage (116), conçue pour fournir une compensation de pression, est reliée à un deuxième dispositif pour générer une dépression.

13. Procédé (400) pour laminer des pièces moulées tridimensionnelles (200) en un matériau contenant des fibres, au moins un laminé formable (300) étant appliqué sur une surface (172) d'une pièce moulée (200), à l'aide d'un outil de moulage (100) selon l'une quelconque des revendications 1 à 12, comprenant au moins :
- l'insertion d'au moins une pièce moulée (200) en un matériau contenant des fibres dans au moins une cavité de moulage (116) d'un corps d'outil (110), la pièce moulée (200) venant en contact, en appui, avec une surface/surface de moulage (172) de la cavité de moulage (116),
- l'introduction d'au moins un laminé (300), le laminé (300) étant appliqué sur une région de bord (220) de la pièce moulée (200) et s'étendant au-dessus d'un espace intérieur (210) de la pièce moulée (200),
- la fermeture de l'outil de moulage (100) par déplacement relatif du corps d'outil (110) avec ladite au moins une cavité de moulage (116) et d'un composant d'outil (150) avec au moins une chambre (154), dans laquelle est reçu un poinçon de moulage (170) déplaçable par rapport à la chambre (154), un bord inférieur (159) de ladite au moins une chambre (154) pressant le laminé (300), dans la région de bord (220) de la pièce moulée (200), contre la pièce moulée (200) et contre un bord correspondant (118) de ladite au moins une cavité de moulage (116), et
- le déplacement dudit au moins un poinçon de moulage (170) dans ladite au moins une chambre (154), une région (160) de ladite au moins une chambre (154), dans laquelle ledit au moins un poinçon de moulage (170) est déplaçable, étant rendue étanche, au moyen d'au moins un premier joint d'étanchéité (180) qui est déplaçable conjointement avec ledit au moins un poinçon de moulage (170) dans la chambre (154), par rapport à une région restante (162) de ladite au moins une chambre (154), de sorte que la pression des deux côtés du laminé (300) est maintenue sensiblement constante lors du déplacement dudit au moins un poinçon de moulage (170) et que le laminé (300) est pressé contre la pièce moulée (200) en synchronisme avec le mouvement dudit au moins un poinçon de moulage (170).

14. Procédé (400) selon la revendication 13, dans lequel une surpression est générée, dans la région (160) de ladite au moins une chambre (154) dans laquelle ledit au moins un poinçon de moulage (170) est déplaçable, au moyen d'au moins un premier dispositif de mise sous pression de cette région (160), lorsque ledit au moins un poinçon de moulage (170) a atteint une position d'extrémité inférieure.
